## Europäisches Patentamt
## European Patent Office
## Office européen des brevets

(11) Veröffentlichungsnummer: **0 241 890**
**A2**

(12) # EUROPÄISCHE PATENTANMELDUNG

(21) Anmeldenummer: 87105419.3

(22) Anmeldetag: 11.04.87

(51) Int. Cl.⁴: **C08G 65/20**

(30) Priorität: 18.04.86 DE 3613106

(43) Veröffentlichungstag der Anmeldung:
21.10.87 Patentblatt 87/43

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Mueller, Herbert, Dr.**
**Carostrasse 53**
**D-6710 Frankenthal(DE)**

(54) Verfahren zur Herstellung von Polytetramethylenetherglykoldiestern mit niedriger Farbzahl.

(57) Verfahren zur Herstellung von Polytetramethylenetherglykoldiestern mit niedriger Farbzahl durch katalytische Polymerisation von Tetrahydrofuran in Gegenwart von Carbonsäureanhydrid, Bleicherde und 2 bis 0,2 Gew.%, bezogen auf das Tetrahydrofuran, eines Alkylenoxids.

EP 0 241 890 A2

## Verfahren zur Herstellung von Polytetramethylenetherglykoldiestern mit niedriger Farbzahl

Diese Erfindung betrifft ein Verfahren zur Herstellung von Polytetramethylenetherglykoldiestern mit niedriger Farbzahl durch Polymerisation von Tetrahydrofuran in Gegenwart von Carbonsäureanhydriden und von Alkylenoxiden an Bleicherdekatalysatoren.

Obwohl man für die Polymerisation von Tetrahydrofuran zur Gewinnung von Polytetramethylenetherglykol oder den entsprechenden Diestern die verschiedensten Katalysatoren vorgeschlagen hat (EP-B 61 668, Seite 2, Zeilen 4 bis 18) sind nur wenige Katalysatoren für die Herstellung von Polymerisaten geeignet, die vom chemischen und physikalischen Eigenschaftsbild her den Markterfordernissen entsprechen. Ein Nachteil dieser an sich vorteilhaften Katalysatoren ist es aber, daß sie im allgemeinen ein Polymerisat liefern, das leichte bis starke Gelb-oder Brauntönung aufweist. Die Verfärbung der Polymerisate ist umso tiefer, je höher die Temperatur gewählt wurde, bei der Tetrahydrofuran polymerisiert wurde. Darüber hinaus spielt auch die Qualität des Tetrahydrofurans eine wichtige Rolle.

Tetrahydrofuran technischer Qualität enthält geringe Mengen an Verunreinigungen in einer Konzentration von 10 - 500 ppm. Die chemische Natur dieser Verunreinigungen ist nicht in allen Einzelheiten bekannt. Obwohl dieses Tetrahydrofuran von sehr hoher Reinheit ist - es hat normalerweise einen Reinheitsgrad von > 99,9 % -, verursachen offensichtlich diese Spurenverunreinigungen bei der Polymerisation die obengenannten Verfärbungen. Darüber hinaus beobachtet man gleichzeitig mit der Verfärbung eine veränderte Reaktionsfähigkeit bei der Herstellung von Polyestern oder Polyurethanen aus dem Polytetramethylenetherglykol. Dies sind gravierende Mängel, denn Farbe und reproduzierbare Verarbeitung gehören zu den wichtigen Eigenschaften eines Polymerisates, das technische Anwendung finden soll.

In den US-Patentschriften 3 980 672, 3 935 252, 2 751 419 sowie in der DE-OS 2 801 792 (US 4 189 566) werden Methoden beschrieben, um technisches Tetrahydrofuran durch Vorbehandlung mit zeolithischen Molekularsieben, starken Mineralsäuren, organischen Sulfonsäuren, Silikagel oder Bleicherden in ein polymerisationsfähiges Monomeres umzuwandeln. Während die in den US-Patentschriften beschriebenen Behandlungen im wesentlichen bewirken, daß die aus dem so behandelten Tetrahydrofuran erhaltenen Polymerisate keine nicht zu entfernende Restsäurezahl aufweisen, gelingt es durch die in der DE-OS 2 801 792 beschriebene Bleicherde-Behandlung, Polymerisate mit verbesserter Farbzahl zu erhalten. Es hat sich jedoch herausgestellt, daß diese Behandlungsmethoden nicht in jedem Fall reproduzierbar für jede auf dem Markt erhältliche technische Qualität des Tetrahydrofurans angewendet werden kann. Die Verfahren nach den obengenannten US-Patentschriften weisen ferner den Nachteil auf, daß das nicht umgesetzte Tetrahydrofuran vor der Wiederverwendung sorgfältig getrocknet und gereinigt werden muß, da es einer Naßaufbereitung des Polymerisates entstammt. Eine ebenfalls schwierige Behandlung mit wäßriger Natriumhypochloridlösung zur Farbverbesserung wird in der US-PS 4 525 580 beschrieben.

Nach den Angaben der EP-B 61 668 stellt man Polytetramethylenetherglykol oder -glykoldiester mit geringer Farbzahl dadurch her, daß man die durch kationische Polymerisation von Tetrahydrofuran erhaltenen Polymerisate in Gegenwart eines Hydrierkatalysators einer Behandlung mit Wasserstoff unterwirft. Diese nachträgliche Entfärbungsmethode ist kostspielig, da sie besondere apparative Einrichtungen und einen separaten Verfahrensschritt erfordert. Die benötigten Katalysatoren sind teuer und je nach Qualität des zu entfernenden Polytetrahydrofurans unter Umständen von geringer Lebensdauer. Ähnliches gilt für eine entfärbende Reinigung des Polymerisates durch eine Aktivkohle-Behandlung, wie sie z.B. in den US-Patentschriften 3 935 252 oder 2 751 419 beschrieben wird. Auch sie erfordert einen apparativen Aufwand und verursacht zusätzliche nicht vernachlässigbare Kosten für den Einsatz der Aktivkohle, die nur eine begrenzte Reinigungskapazität besitzt.

Offensichtlich gibt es unterschiedliche Verunreinigungen im Tetrahydrofuran, die zu Verfärbungen in den Endprodukten führen. Diese Verunreinigungen sind in den meisten Fällen nicht genau identifiziert worden. Deshalb kann durch analytische Untersuchung nicht immer vorausgesagt werden, ob die Qualität des verwendeten Tetrahydrofurans für die Polymerisation geeignet ist, so daß z.B. trotz Vorbehandlung des Monomeren kein spezifikationsgerechtes Polymerisat erhalten wird. Deshalb macht es die großtechnische Herstellung von Polytetrahydrofuran erforderlich, eine verfahrenstechnische und apparative Maßnahme vorzusehen, um Ausschußproduktion sicher zu vermeiden.

Es bestand deshalb das dringende Bedürfnis, ein Polymerisationsverfahren für Tetrahydrofuran zu entwickeln, das es gestattet, das Monomere mit den genannten Verunreinigungen einzusetzen, ohne daß eine zusätzliche nachträgliche Maßnahme zur Verringerung der Farbzahl ergriffen werden muß.

Es wurde nun gefunden, daß man bei der katalytischen Polymerisation von Tetrahydrofuran in Gegenwart von Carbonsäureanhydriden und Bleicherden Polytetramethylenetherglykoldiester mit der gewünschten niedrigen Farbzahl erhält, wenn man die Polymerisation in Gegenwart von 2 bis 0,2 Gew.%, bezogen auf das Tetrahydrofuran, eines 1,2-Alkylenoxids vornimmt.

Für das erfindungsgemäße Verfahren läßt sich Tetrahydrofuran von handelsüblicher Qualität verwenden. Dabei spielt es keine Rolle, ob das Tetrahydrofuran auf der Basis von Acetylen und Formaldehyd, Maleinsäureanhydrid, Allylalkohol oder Butadien hergestellt wurde. In allen Fällen lassen sich daraus nach dem Verfahren der Erfindung Polytetramethylenetherglykoldiester oder die daraus gewonnenen Glykole mit Farbzahlen < 20 APHA (nach DIN 53 409, Juli 1967) erhalten. Die erhaltenen Polytetramethylenetherglykole werden außerdem ohne nachweisbare Säurezahl erhalten.

Nach dem erfindungsgemäßen Verfahren wird die Copolymerisation in Gegenwart von organischen Carbonsäureanhydriden als Promotor durchgeführt. Vorteilhafterweise verwendet man solche Carbonsäureanhydride, die sich von aliphatischen oder aromatischen, Poly-und/oder vorzugsweise Monocarbonsäuren mit 2 bis 12, vorzugsweise 2 bis 8 Kohlenstoffatomen ableiten. Genannt seien beispielsweise Buttersäureanhydrid, Valeriansäureanhydrid, Capronsäureanhydrid, Caprylsäureanhydrid, Pelargonsäureanhydrid, Acrylsäureanhydrid und vorzugsweise Propionsäureanhydrid und Essigsäureanhydrid. Da die erfindungsgemäß hergestellten Polytetramethylenetherglykolediester für die meisten Anwendungen in die entsprechenden Glykole übergeführt werden, verwendet man in der Praxis vorzugsweise Carbonsäureanhydride mit einer niederen Zahl an C-Atomen. Aus Preisgründen und Gründen der leichten Zugänglichkeit wird Acetanhydrid bevorzugt. Selbstverständlich sind auch gemischte Anhydride und Mischungen der oben genannten Anhydride verwendbar. Man wendet das Carbonsäureanhydrid z.B. in Mengen von 1,5 bis 15 Gew.%, bezogen auf das Tetrahydrofuran an.

Bleicherden, die als kationische Katalysatoren für die Polymerisation eingesetzt werden, sind z.B. in Ullmann's Enzyklopädie der technischen Chemie, 3. Auflage, Band IV, Seiten 541-545 beschrieben. Synthetische Bleicherden werden z.B. in der GB-PS 854 958 beschrieben. Vorzugsweise verwendet man im wesentlichen wasserfreie Bleicherden, die man aus den handelsüblichen, wasserhaltigen Bleicherden durch Trocknen bei Temperaturen von 100 bos 200°C bei Normaldruck oder vermindertem Druck erhält. Der Wassergehalt sollte insbesondere kleiner als 0,1 Gew.% sein und 0,2 Gew.% nicht übersteigen.

Die Bleicherde kann in suspendierter Form oder als fest angeordnetes Katalysatorbett angewendet werden. Dies kann z.B. in der Weise geschehen, daß in einem Röhrenreaktor die fest angeordnete Katalysatorschüttung von der Polymerisationsausgangsmischung durchströmt wird.

Zur Herstellung geeigneter Katalysatorformkörper verfährt man z.B. so, daß man die handelsüblichen wasserhaltigen Bleicherden mit Bindemitteln, insbesondere Wasser, verknetet und zu Formkörpern verpreßt. Anschließend werden die wasserhaltigen Formkörper oberhalb 100°C, vorzugsweise bei Temperaturen von 150 bis 700°C bei Normaldruck oder unter vermindertem Druck, gegebenenfals in Gegenwart von unter den Reaktionsbedingungen inerten Gasen, z.B. Edelgasen, wie Helium oder Argon oder insbesondere Stickstoff auf die obengenannten Wassergehalte entwässert.

Die 1,2-Alkylenoxide können unsubstituiert oder substituiert sein. Als Substituenten kommen lineare oder verzweigte Alkylgruppen mit 1 bis 6, vorzugsweise 1 bis 2 C-Atomen, Phenylreste oder mit Alkoxigruppen mit 1 bis 2 C-Atomen oder mit Halogen-Atomen substituierte Alkyl-oder Phenylreste in Betracht. Aus praktischen Gründen sind Ethylenoxid und Propylenoxid bevorzugt. Ethylenoxid ist besonders gut geeignet, da dessen Zusatz in geringsten Mengen die größte farbaufhellende Wirkung hervorbringt. Das Alkylenoxid wird in Mengen von 2 bis 0,2, vorzugsweise 1,5 bis 0,5 Gew.%, bezogen auf das Tetrahydrofuran eingesetzt. Es ist nicht bekannt, in welcher Weise diese geringen Mengen Alkylenoxid die farbvermindernde Wirkung ausüben. Unbekannt ist weiter das Schicksal der in so geringen Mengen eingesetzten Alkylenoxide im Verlaufe der Polymerisation. Es gelang nicht, Alkylenoxid in den fertigen Polymerisationsansätzen oder in Bruchstücken des Polymerisats nachzuweisen, welche man z.B. bei der kationischen Depolymerisation des Polytetrahydrofurans erhält.

Nach den Angaben der DE-OS 2 916 653 und der EP-A-104 609 (s. S.8, Zeilen 29-30) wird durch das Verhältnis Tetrahydrofuran/Säureanhydrid das Molekulargewicht des erhaltenen Polytetrahydrofurans bestimmt. Je höher die Konzentration des Essigsäureanhydrids gewählt wird, desto niedriger ist das Molekulargewicht des erhaltenen Polymeren. Die Menge des für das Verfahren dieser Erfindung eingesetzten Ethylenoxids hat demgegenüber jedoch keinen Einfluß auf das Molekulargewicht. Ein solcher Einfluß existiert offensichtlich hier nicht. Wie man z.B. Houben-Weyl, Methoden der organischen Chemie, Band VI/3, Seite 482, (1965), entnehmen kann, reagieren 1,2-Alkylenoxide und Carbonsäureanhydride sehr leicht und mit hoher Geschwindigkeit, insbesondere in Gegenwart von Katalysatoren, unter Bildung von Carbonsäurediestem von 1,2-Diolen. Man hätte deshalb erwar ten sollen, daß derartige Diester die farbaufhellende Wirkung hervorrufen. Durch gezielten Einsatz dieser Ester gelang es aber nicht, Polytetrahydrofuran mit niedriger Farbzahl herzustellen.

Man polymerisiert bei dem erfindungsgemäßen Verfahren zweckmäßigerweise in einem Temperaturbereich von 30 bis 70°C, vorzugsweise von 40 bis 60°C bei Normaldruck. Die benötigten Reaktionszeiten liegen je nach angewendeter Reaktionstemperatur zwischen 5 und 20 Stunden, damit das Polymerisationsgleichgewicht erreicht wird. Im Polymerisationsgleichgewicht werden abhängig von der Polymerisationstemperatur Umsätze von Tetrahydrofuran erzielt, die zwischen 35 und 60 Gew.% liegen. Das Umsatzgleichgewicht wird außerdem durch das Mengenverhältnis Carbonsäureanhydrid zu Tetrahydrofuran bestimmt. Den höheren Carbonsäureanhydridkonzentrationen entspricht der höhere Umsatz.

Da das Reaktionsgemisch in der Gleichgewichtseinstellung neben den erfindungsgemäß hergestellten Diestern der Polytetramethylenetherglykole mit geringer Farbzahl im wesentlichen nur nicht umgesetztes Tetrahydrofuran enthält, kann man das Tetrahydrofuran durch Destillation, gegebenenfals unter vermindertem Druck leicht abtrennen und, falls gewünscht, in die Reaktion zurückführen. Unter Umständen ist es empfehlenswert, das abgedampfte Tetrahydrofuran einer fraktionierten Destillation zu unterwerfen, um die darin in geringen Mengen enthaltenen Hoch-und Tiefsieder abzutrennen.

Die nach dem Verfahren der Erfindung erhaltenen Polytetramethylenetherglykoldiester sind Polymere des Tetrahydrofurans mit Polymerisationsgraden > 2. Eine niedrige Farbzahl bedeutet, daß die erfindungsgemäß hergestellten Polytetramethylenetherglykoldiester oder -glykole eine HAZEN-Farbzahl (APHA-Verfahren) von beispielsweise < 35, vorzugsweise < 20 HAZEN aufweisen. Die Bestimmung dieser Farbzahlen wird in den Normen DIN 53 409 und ASTM-D-1209 beschrieben.

Die erfindungsgemäß hergestellten Polytetramethylenetherglykolcarbonsäurediester mit niedriger Farbzahl können in an sich bekannter Weise durch Verseifung, beispielsweise durch Behandlung mit Calciumoxid und/oder -hydroxid als Katalysator oder vorzugsweise durch Umesterung, beispielsweise mit Methanol analog den Angaben in der US-PS 2 499 725 oder gemäß Journal of American Chemical Society, Vol. 70, Seite 1842, in die entsprechenden Glykole überführt werden.

Die erhaltenen Polyoxibutylenglykole, insbesondere solche mit Molekulargewichten von 250 bis 3000 eignen sich vorzüglich zur Her stellung von Polyurethanen oder Polyestern mit geringer oder keiner Eigenfarbe. Sie verleihen den daraus hergestellten Konstruktionswerkstoffen ein hohes mechanisches Eigenschaftsniveau, so daß sie insbesondere für anspruchsvolle Verwendungsmöglichkeiten eingesetzt werden können.

Das vorteilhafte Ergebnis des Verfahrens der Erfindung ist überraschend. Nach dem in der EP-B-104 609 beschriebenen Verfahren copolymerisiert man Tetrahydrofuran mit Alkylenoxiden in Gegenwart von Carbonsäureanhydriden, wobei die Ausgangsgemische 50 bis 5, vorzugsweise 33 bis 10 Gew.% Alkylenoxid enthalten. Man erhält hierbei Mischpolymerisate mit unterschiedlichen Mengen an Alkylenoxid-Einheiten. Die nach diesem bekannten Verfahren erhältlichen Copolymerisate weisen jedoch nur dann äußerst geringe Farbzahlen auf, wenn das verwendete Tetrahydrofuran vor der Polymerisation mit starken Mineralsäuren, organischen Sulfonsäuren, Silikagel oder Bleicherden nach dem in der EP-B-3112 beschriebenen Methode vorbehandelt wurde. Aber auch dann kann es zu verfärbten Copolymerisaten kommen, wenn man bei der Aufarbeitung der Polymerisationsansätze nicht dafür sorgt, daß die Katalysatorabtrennung unter Ausschluß der Atmosphäre erfolgt. Es war somit nicht voraussehbar, daß beim Einsatz so geringer Mengen Alkylenoxid und von unvorbehandeltem technischen Tetrahydrofuran sowie bei Verzicht auf extrem anerobe Arbeitsbedingungen Polymerisate mit äußerst geringen Farbzahlen erhalten werden. Insbesondere ist es nicht zu erklären, weshalb bei Anwendung geringer Alkylenoxid-Konzentrationen farblich bessere Polymerisate entstehen als bei der Copolymerisation mit verhältnismäßig hohen Alkylenoxid-Konzentrationen.

Ein weiterer Vorzug des erfindungsgemäßen Verfahrens ist, daß nunmehr bei höherer Temperatur als sonst üblich und damit mit höherer Reaktionsgeschwindigkeit polymerisiert werden kann. Die Farbe der erhaltenen Polymerisate hängt nämlich u.a. auch von der gewählten Polymerisationstemperatur ab. Je höher man die Temperatur wählt, desto stärker verfärbte Produkte werden erhalten. Da aber bei der erfindungsgemäßen Polymerisation Verfärbungen des Polymerisates vermieden werden, kann man nunmehr bei höherer Temperatur polymerisieren. Dies wiederum bewirkt eine höhere Reaktionsgeschwindigkeit und Verengung der Molekulargewichtsverteilung im Polymerisat.

Die in den Beispielen genannten Teile sind Gewichtsteile, sie verhalten sich zu Volumenteilen wie das Kilogramm zum Liter.

4

## Beispiele 1 bis 6

Marktgängiges technisches Tetrahydrofuran wird entweder unbehandelt oder nach der in der EP-A 3 112 beschriebenen Reinigung für die Polymerisation verwendet.

Aus käuflicher Bleicherde (®Tonsil Optimum FF der Südchemie AG, München) werden Strangpreßlinge mit einem Durchmesser von 2 bis 3 mm und einer durchschnittlichen Länge von 4 mm hergestellt und 8 Stunden bei 200°C getrocknet.

Man gibt in einen Polymerisationsbehälter 500 Volumenteile der Bleicherdestränge und unter Luftausschluß eine Lösung aus 300 Teilen Tetrahydrofuran, 18 Teilen Essigsäureanhydrid und wechselnden (wie in der Tabelle angegeben) Mengen Ethylenoxid. Die Polymerisationsansätze läßt man 9 Stunden bei 50°C thermostatisiert stehen. Danach werden die Reaktionsgemische vom Katalysator abgegossen. Die erhaltenen Ergebnisse sind in der Tabelle angegeben.

Die Polymerisate werden in der gleichen Menge Methanol gelöst und nach Zugabe von 0,01 Gew.% Natriummethylat durch Abdestillieren des Methylacetat/Methanol-Azetrops bei 54 bis 55°C und Normaldruck in einer Kolonne zum entsprechenden Glykol umgeestert. Man erhält ein Polytetramethylenetherglykol mit dem Molekulargewicht 1000. Die Farbzahlen der Glykole entsprechen denjenigen der Ester. Die analytische Untersuchung der flüchtigen Anteile des erhaltenen Reaktionsgemisches ergibt keinen Anhaltspunkt für einen Gehalt an Ethylenoxid. Das $C^{13}$-NMR-Spektrum des Polymethylenetherglykols gibt keinen Hinweis dafür, daß im Polymerisat C-2-Einheiten aus Ethylenoxid enthalten sind. Depolymerisiert man das Polymerisat bei 160°C mit Bleicherde als Katalysator, so erhält man kaum verunreinigtes Tetrahydrofuran. In ihm kann keine Dioxan-Konzentration gaschromatographisch festgestellt werden, die der Menge des eingesetzten Ethylenoxids entspräche.

## Beispiele 7 bis 11

Man verfährt wie in den Beispielen 1 bis 6 beschrieben, wobei man aber für die Polymerisation eine Lösung verwendet, die aus 300 Teilen Tetrahydrofuran, 8,1 Teilen Essigsäureanhydrid und der in der Tabelle genannten Ethylenoxidmenge besteht. Man erhält ein Polytetrahydrofuran mit dem Molekulargewicht 2000. Aus der Tabelle sind die Ergebnisse der Polymerisationsversuche in Abhängigkeit von der eingesetzten Ethylenoxid-Menge ersichtlich.

Wiederholt man die Versuche, wobei man jedoch das Ethylenoxid durch die gleiche Menge Propylenoxid ersetzt, so erhält man Polymerisate mit den in der Farbzahlspalte der Tabelle in Klammern gesetzten Farbzahlen.

Tabelle

| Beispiel | Ethylen-oxid Gew.% | THF-Umsatz Gew.% | HAZEN-Farb-zahl des PTMEG[1] | Anmerkung zur THF-Qualität |
|---|---|---|---|---|
| 1 (Vgl.) | 0,0 | 53 | 80 | Handelsware unbehandelt |
| 2 (Vgl.) | 0,0 | 54 | 40 | Handelsware nach EP-A 3112 behandelt |
| 3 | 0,2 | 52 | 25 | Handelsware unbehandelt |
| 4 | 0,4 | 53 | 5-10 | Handelsware unbehandelt |
| 5 | 0,5 | 51 | 5 | Handelsware unbehandelt |
| 6 | 1 | 52 | 5 | Handelsware unbehandelt |
| 7 (Vgl.) | 0,00 | 50 | 60 (60) | Handelsware unbehandelt |
| 8 (Vgl.) | 0,00 | 49 | 35 (35) | Handelsware nach EP-A 3112 behandelt |
| 9 | 0,2 | 51 | 10 (25) | Handelsware unbehandelt |
| 10 | 0,4 | 50 | 10 (20) | Handelsware unbehandelt |
| 11 | 0,5 | 51 | 5 (15) | Handelsware unbehandelt |
| 12 | 1 | 50 | 5 (10) | Handelsware unbehandelt |

[1] PTMEG: Polytetramethylenetherglykol

**Ansprüche**

1. Verfahren zur Herstellung von Polytetramethylenetherglykoldiestern mit niedriger Farbzahl durch katalytische Polymerisation von Tetrahydrofuran in Gegenwart von Carbonsäureanhydrid und Bleicherde, dadurch gekennzeichnet, daß man die Polymerisation in Gegenwart von 2 bis 0,2 Gew.%, bezogen auf das Tetrahydrofuran, eines 1,2-Alkylenoxids vornimmt.

2. Verfahren nach Anspruch 1, dadurch gekennzeichnet, daß man, bezogen auf das Tetrahydrofuran, 1,5 bis 0,5 Gew.% 1,2-Alkylenoxid anwendet.

3. Verfahren nach Anspruch 1, dadurch gekennzeichnet, daß man als 1,2-Alkylenoxid Ethylenoxid verwendet.

4. Verfahren nach Anspruch 1, dadurch gekennzeichnet, daß man als Carbonsäureanhydrid Acetanhydrid verwendet.

5. Verfahren nach Anspruch 1, dadurch gekennzeichnet, daß man das Gemisch aus Tetrahydrofuran, 1,2-Alkylenoxid und Carbonsäureanhydrid mit der Bleicherde, die in einem festen Katalysatorbett angeordnet ist, in Kontakt bringt.

7. Verfahren nach Anspruch 1, dadurch gekennzeichnet, daß man die Polymerisation bei einer Reaktionstemperatur von 30 bis 70°C unter Normaldruck durchführt.

8. Verfahren nach Anspruch 1, dadurch gekennzeichnet, daß man getrocknete Bleicherde verwendet.

9. Verwendung der nach Anspruch 1 erhaltenen Polytetramethylenetherglykoldiester für die Herstellung von Polytetramethylenetherglykolen.